# EUROPEAN PATENT SPECIFICATION

(11) **EP 2 524 738 B1**
(45) Date of publication and mention of the grant of the patent: **21.05.2014**
(21) Application number: 11188255.1
(22) Date of filing: 08.11.2011
(51) Int. Cl.: B08B 9/08, B65G 65/23

(54) **Automatic washing machine for large-sized box**
Automatische Waschmaschine für große Kisten
Machine de lavage automatique pour boîte de grande taille

(30) Priority: 12.05.2011 KR 20110044379
(43) Date of publication of application: 21.11.2012
(73) Proprietor: Cleson Co., Ltd., Incheon (KR)
(72) Inventor: Yang Hee Joon, Bucheon-City, Gyeonggi-Do (KR); Nam Hyo Joon, Incheon, 402-060 (KR)
(74) Representative: Schlief, Thomas P.

(56) References cited:
- DE-A1- 1 757 302
- DE-U1- 9 113 313
- GB-A- 1 224 349
- US-A- 1 883 772

## Description

### BACKGROUND OF THE INVENTION

### (a) Field of the Invention

The present invention relates to an automatic washing machine for a large-sized box, and more particularly to an automatic washing machine for a large-sized box, in which the box is rotated 90 degrees by a rotation part in one direction and then supplied to a washing part so that cleaning fluid sprayed to the inside of the box can be directly and naturally removed without residues, thereby significantly improving a washing function of the washing machine.

### (b) Description of the Related Art

In general, an automated production line employs a box for carrying various components (or products), and the box is usually stained with contaminants during the carry, and has an effect on product quality.

Accordingly, the contaminated box is ordinarily cleaned while undergoing a cleaning process, a liquid-removing process and a draying process of a device, and then reused. However, if such a device is used in washing a large-sized box, it needs a structural improvement to enhance washing efficiency. Meanwhile, as shown in Fig. 1, Korean Patent Application No. 10-2009-0078779, filed by the same applicant and titled "apparatus for automatically washing and drying box," has disclosed that a housing 4 of a washing machine includes a cleaning space 8 where a washing nozzle 16, a rinsing nozzle 18 and an air nozzle 20 are installed in sequence, a drying space 10 placed under the cleaning space 8 as being separated by a separating plate 6 and supplying hot air, and a passage 12 placed at a right side between the clean space 8 and the drying space 10 and passing a box 2. Further, a conveyor 14 for conveying the box 2 is provided in each of the cleaning space 8 and the drying space 10.

With this configuration, if the box 2 enters the cleaning space 8 through a supplying part of the washing machine, the box 2 is washed with cleaning fluid sprayed from the washing nozzle 16 and the rinsing nozzle 18 while being conveyed by the conveyor 14.

The upper and lower parts of the box 2 are washed by the washing nozzle 16 and the rinsing nozzle 18 placed in upper and lower regions of the cleaning space 8, and then the cleaning fluid is removed by high-pressure air discharged from the air nozzle 20.

Next, the box 2 is rotated 180 degrees while passing through the passage 12 and then falls down into the drying space 10. Then, the box 2 is dried by hot air while being conveyed by the conveyor 25, and is taken out.

Such a conventional washing machine has a structure where the box is conveyed while being cleaned by the cleaning liquid sprayed from the washing nozzle 16 and the rinsing nozzle 18 coupled to the upper and lower regions of the cleaning space 8, so that contaminants can be left on the circumference and inside of the box 2. Accordingly, the conventional washing machine is remarkably decreased in the washing function and washing efficiency.

In other conventional washing machine, as described for example in documents GB-A-1224349 or US-A-1883772, the box are rotated through rotating parts which perform a tilting of the box which requires space and does not leads to a satisfactory positioning of the rotated box.

### SUMMARY OF THE INVENTION

Accordingly, the present invention is conceived to solve the forgoing problems, and an aspect of the present invention is to provide an automatic washing machine for a large-sized box, in which the box is rotated 90 degrees by a rotation part in one direction and then supplied to a washing part so that cleaning fluid sprayed to the inside of the box can be directly and naturally removed without residues, thereby significantly improving a washing function of the washing machine.

An exemplary embodiment of the present invention provides an automatic washing machine for a large-sized box, which comprises a supplying part 10 supplying boxes 2 one by one through a conveyor 6 and a distributor 8; a washing part 14 placed in an exit side of the supplying part 10 and washing the box 2 with a cleaning fluid; a fluid-removing part 16 placed in an exit side of the washing part 14 and removing the cleaning fluid from a surface of the box 2 by high pressure air; a driving part 18 placed in an exit side of the fluid-removing part 16 and drying the box 2 by high pressure air; and a controller 20 connected to and transferring a command for operation to the supplying part 10, the washing part 14, the fluid-removing part 16 and the drying part 18, characterized in that the rotation part 12 making the box 2 conveyed from the supplying part 10 be forward rotated 90° in one direction and conveying the rotated box 2 to the washing part 14 is provided between the supplying part 10 and the washing part 14, and connected to the controller 20.

### BRIEF DESCRIPTION OF THE DRAWINGS

The above and/or other aspects of the present invention will become apparent and more readily appreciated from the following description of the exemplary embodiments, taken in conjunction with the accompanying drawings, in which:

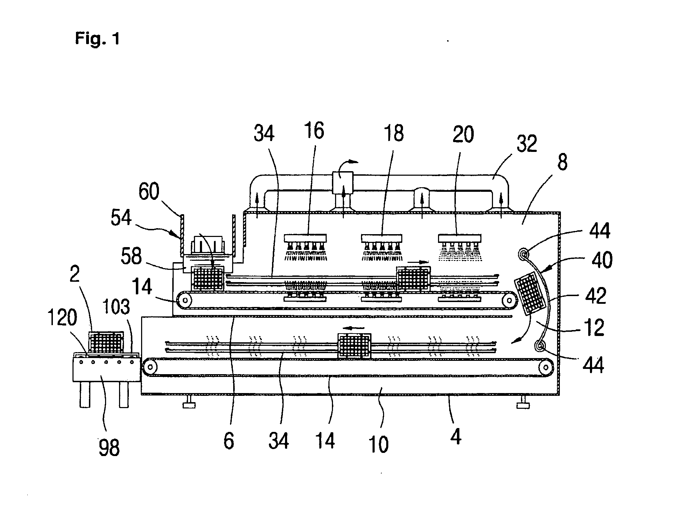

- **Fig. 1**: is an operation view of a conventional washing machine;
- **Fig. 2**: is a front view of a washing machine according to an exemplary embodiment;
- **Fig. 3**: is a plan view of the washing machine according to an exemplary embodiment;
- **Fig. 4**: is a cross-section view taken along line A-A of Fig. 2;
- **Fig. 5**: is a cross-section view taken along line B-B of Fig. 2;
- **Fig. 6**: is a partial operation view of "C" in Fig. 2;
- **Fig. 7**: is a partial exploded perspective view of "D" in Fig. 4;
- **Fig. 8**: is a perspective view of a rotation part according to an exemplary embodiment;
- **Figs. 9a and 9b**: are operation views of the rotation part according to an exemplary embodiment;
- **Fig. 10**: is a perspective view of the rotation part according to an exemplary embodiment;
- **Fig. 11**: is a partial perspective view of "E" in Fig. 10;
- **Fig. 12**: is an operation view of "F" in Fig. 10;
- **Fig. 13**: is a block diagram of a controller according to an exemplary em- bodiment; and
- **Figs. 14a to 14e**: are operation views of a washing part.

### DETAILED DESCRIPTION OF THE EMBODIMENTS

Hereinafter, exemplary embodiments will be described with reference to accompanying drawings. Also, detailed descriptions of known functions and configurations incorporated herein will be omitted if they may make the subject matter of the present invention rather unclear. Further, since terms to be described are defined in consideration of the functions of the present invention, they may vary according to user's intention, practice or the like. Hence, the terms have to be interpreted based on the contents of the entire specification.

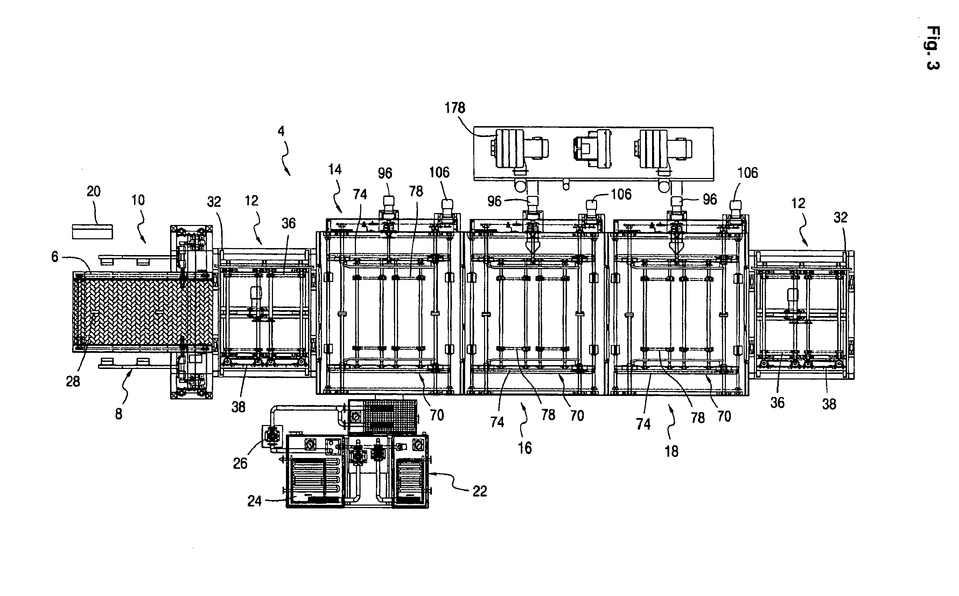

A large-sized box 2, used in a distribution line so as to carry various components (or products), is stained with contaminants while being carried, distributed or stored and has an effect on the quality of products being carried together. Thus, the large-sized box 2 contaminated as above has to be washed and dried in a washing machine 4 (see Fig. 3).

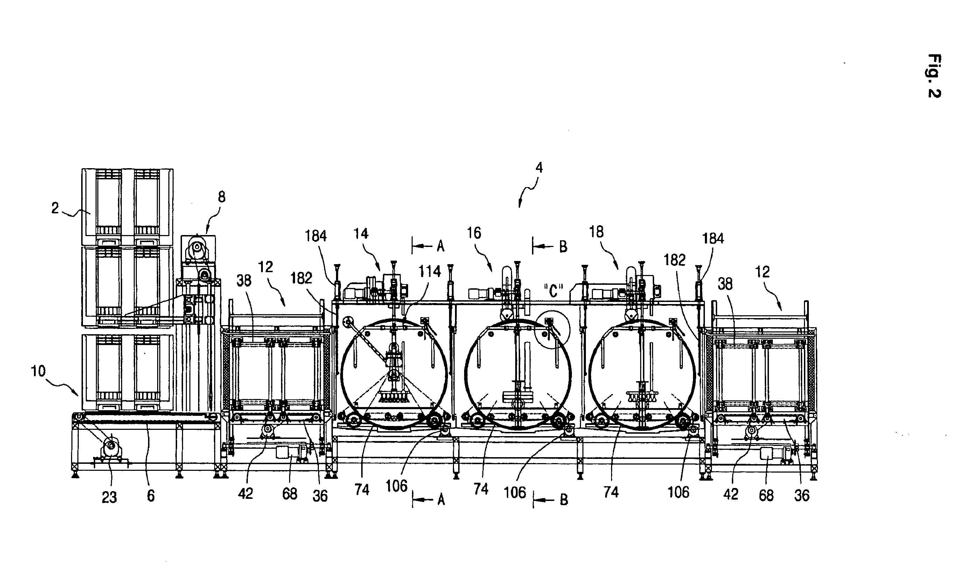

Figs. 2 to 7 show the washing machine 4 according to an exemplary embodiment. The washing machine 4 sequentially includes a supplying part 10 for supplying the box 2 one by one through a conveyor 6 and a distributor 8; a rotation part 12 placed in an exit side of the supplying part 10 and making the conveyed box 2 rotate 90 degrees in one direction; a washing part 14 placed in an exit side of the rotation part 12 and washing the box 2 with cleaning fluid, a fluid-removing part 16 placed in an exit side of the washing part 14 and removing the cleaning fluid left on the surface of the box 2 by high-pressure air; a drying part 18 placed in an exit side of the fluid-removing part 16 and drying the box 2 by high-pressure air; and a rotation part 12 placed in an exit side of the drying part 18 and making the box 2 reversely rotate 90 degrees in the other direction, in which the supplying part 10, the rotation part 12, the washing part 14, the fluid-removing part 16 and the drying part 18 are connected to a controller 20 that gives orders for operations.

Also, a cleaning-fluid supplying unit 22 is provided in the washing part 14 and connected to the controller 20.

The supplying part 10 includes the conveyor 6 connected to a shaft of a conveying motor 23 by a chain, a first sensor 28 for checking whether or not the box 2 is on the conveyor 6, and the distributor 8 placed in a tail of the conveyor 6 and discharging the boxes 2 one by one.

Also, the conveying motor 23, the first sensor 28 and the distributor 8 are connected to the controller 20.

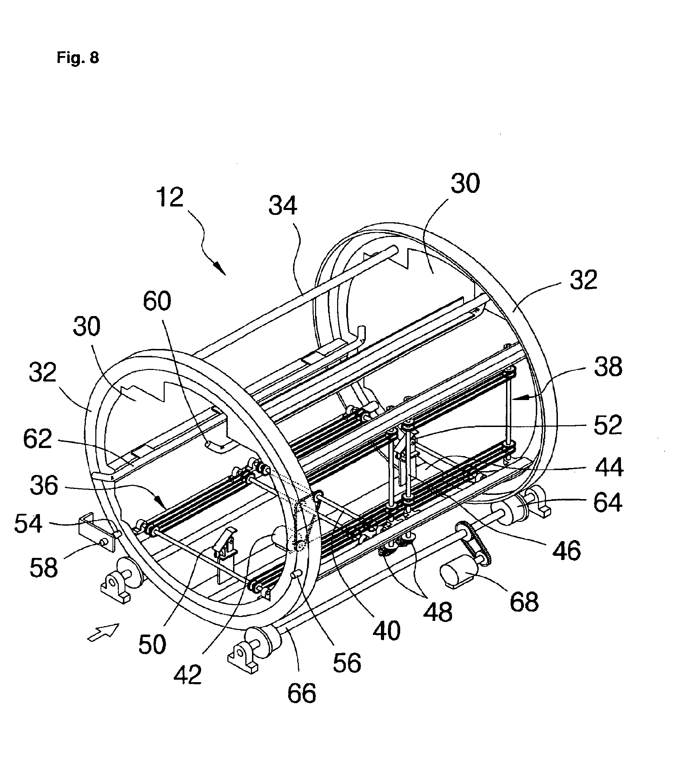

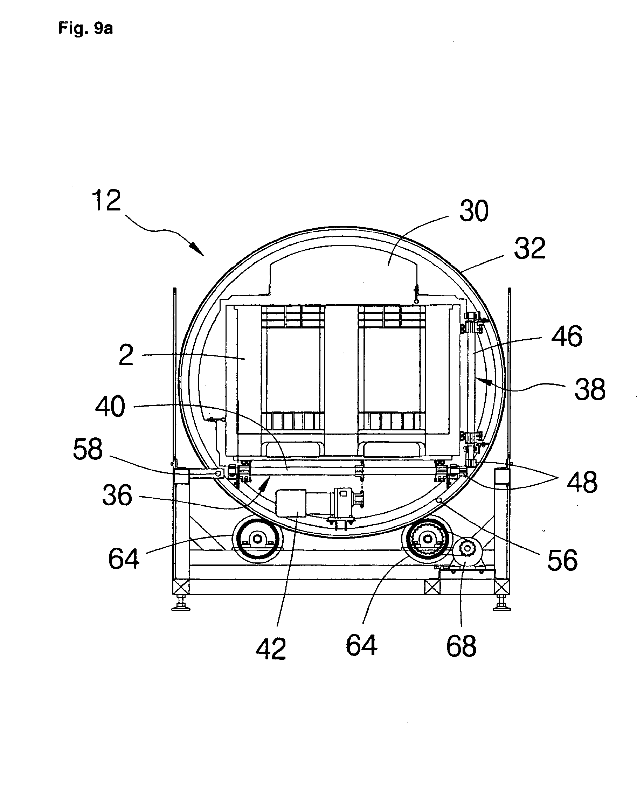

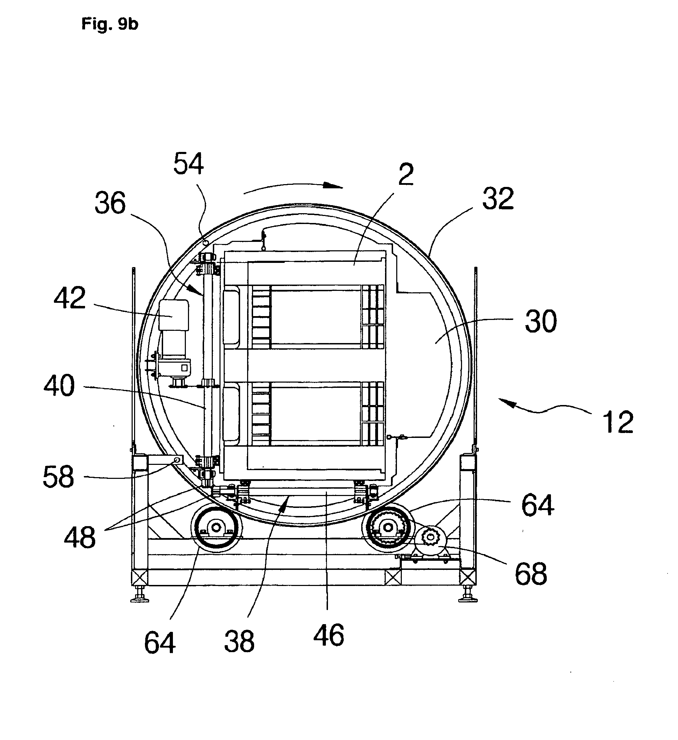

The rotation part 12 placed in the exit side of the supplying part 10 includes two cylindrical rotation drums 32 formed with guiding holes 30 (see Fig. 8) through which the box 2 can pass as shown in Figs. 8, 9a and 9b. The two rotating drums 32 are coupled to ends of a lengthwise arranged connection bar 34, respectively.

Between the rotation drums 32, there are provided a horizontal conveyor 36 to be in contact with the bottom of the box 2, and a vertical conveyor 38 to be in contact with the lateral wall of the box 2. The horizontal conveyor 36 is horizontally arranged and has an end coupled to the rotation drum 32. The vertical conveyor 36 is arranged perpendicularly to the horizontal conveyor 36 and has an end coupled to the rotation drum 32.

A conveying motor 42 for supplying a driving force is connected to a horizontal shaft 40 of the horizontal conveyor 36 by a chain and also connected to the controller 20. The conveying motor 42 is coupled to a connection frame 44 placed under the horizontal conveyor 36 and connecting with the rotation drum 32.

The end of the horizontal shaft 40 of the horizontal conveyor 36 and the end of the vertical shaft 46 of the vertical conveyor 38 are respectively provided with bevel gears 48 and engaged with each other. At this time, the driving force of the conveying motor 42 is transferred to the horizontal shaft 40, the bevel gear 48 and the vertical shaft 46 in sequence, so that the horizontal conveyor 36 and the vertical conveyor 38 can operate simultaneously.

Second and third sensors 50 and 52 for checking whether or not the box 2 enters are provided in the head and tail of the connection frame 44 and connected to the controller 20. Further, horizontal and vertical projection pins 54 and 56 are respectively installed in a front of the rotation drum 32 so as to check whether it is rotated 90 degrees. Also, an adjusting sensor 58 for checking the positions of the horizontal and vertical projection pins 54 and 56 is separated from the front of the rotation drum 32 and connected to the controller 20.

Further, an upper guide bar 60 for guiding the box 2 is lengthwise arranged above the horizontal conveyor 36 and coupled to the rotation drum 32, and a lateral guide bar 62 for guiding the box 2 is lengthwise arranged above the vertical conveyor 38 and coupled to the rotation drum 32.

Support rollers 64 for transferring torque are rotatably provided while contacting opposite bottoms of each rotation drum 32, and respectively coupled to the heads and tails of two rotary shafts 66 lengthwise arranged at opposite sides of the rotation drums 32. A shaft of a rotary motor 68 for transferring a driving force is connected to either of the rotary shafts 66 by a chain, and connected to the controller 20.

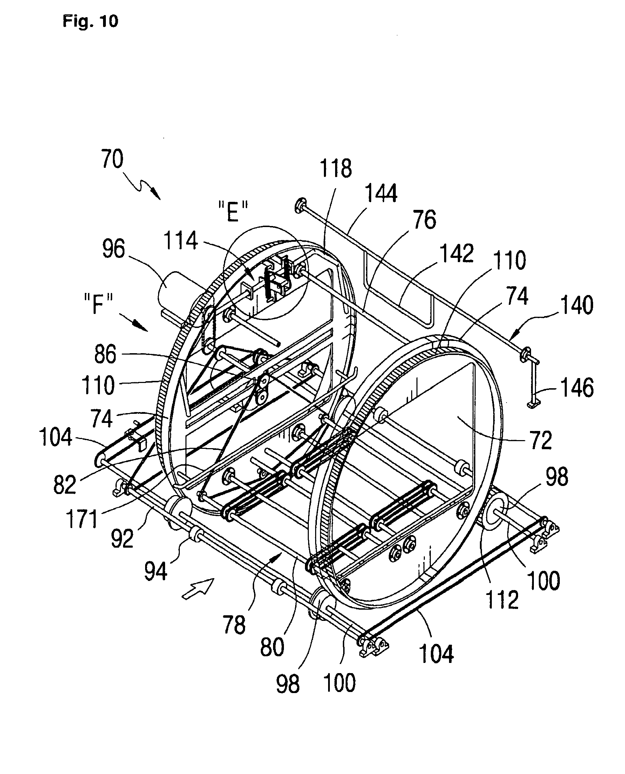

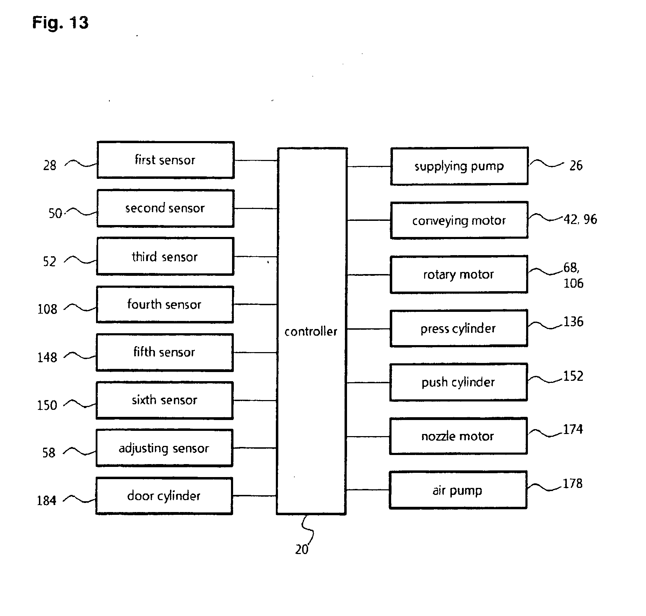

The washing part 14 placed in the exit side of the rotation part 12 is provided with a rolling device 70 for rolling the box 2 at a stop position. As shown in Figs. 10 to 13, the rolling device 70 includes two cylindrical rotation drums 74 each formed with a guiding hole 72 (see Fig. 10). A connection bar 76 is lengthwise arranged and respectively coupled to opposite ends of the two rotation drums 74, and a conveyor 78 is horizontally arranged in a lower portion between the rotation drums 74 and coupled to the rotation drum 74.

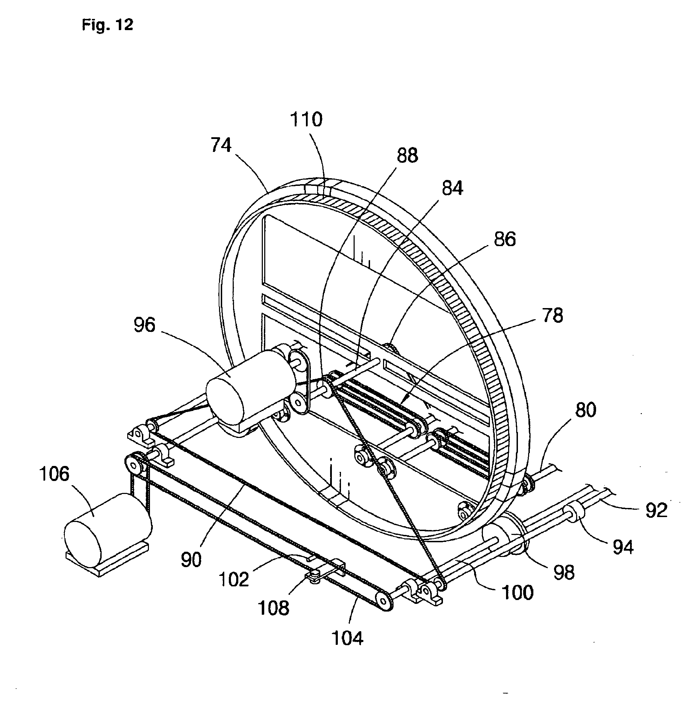

A conveying shaft 80 of the conveyor 78 arranged as above is breadthwise arranged and rotatably coupled to the opposite rotation drums 74. Some of a transfer chain 82 are wound on and connected to the other end of the conveying shaft 80, and others of the transfer chain 82 are wound on a center sprocket 86 coupled to the center of the rotation drum 74 by a center shaft 84 (see Fig. 12).

The center shaft 84 is coupled with another auxiliary sprocket 88 on which some of a guiding chain 90 are wound. Others of the guiding chain 90 are wound on ends of guiding shafts 92 arranged in front of initial and exit sides of the conveyor 78. Each guiding shaft 92 is breadthwise arranged and coupled with a guiding roller 94 in the middle thereof.

A conveying motor 96 for supplying a driving force is coupled to the other end of the center shaft 84 by a chain, and connected to the controller 20. Further, the conveying motor 96 is fastened to a wall of the washing part 14.

Also, support rollers 98 are rotatably provided while contacting the front and rear bottoms of the two rotation drums 84. The support rollers 98 are respectively coupled to opposite sides of two rotary shafts 100 breadthwise arranged in the front and rear sides of the rotation drums 74. A transfer chain 104 coupling with a projection pin 102 is wound on the other ends of the two rotary shafts 100, and a shaft of the rotary motor 106 for supplying a driving force is coupled to either of the rotary shafts 100 by a chain.

The rotary motor 106 provided as above is connected to the controller 20 and fastened to the wall of the washing part 14. A fourth sensor 108 sensing a location of the projection pin 1 02is separately arranged outside the transfer chain 104 and connected to the controller 20.

Further, a drum chain 110 is circularly wound on each of the two rotation drums 74, and a drum sprocket 112 engaging with the drum chain 110 is placed in each support roller 98 coupled to opposite sides of either of the rotary shafts 100. At this time, the rotation drum 74 is rotated by the driving force transferred through the drum sprocket 112.

Also, a locking member 114 is provided in an upper part of the inside of each rotation drum 74 and locks and releases the box 2.

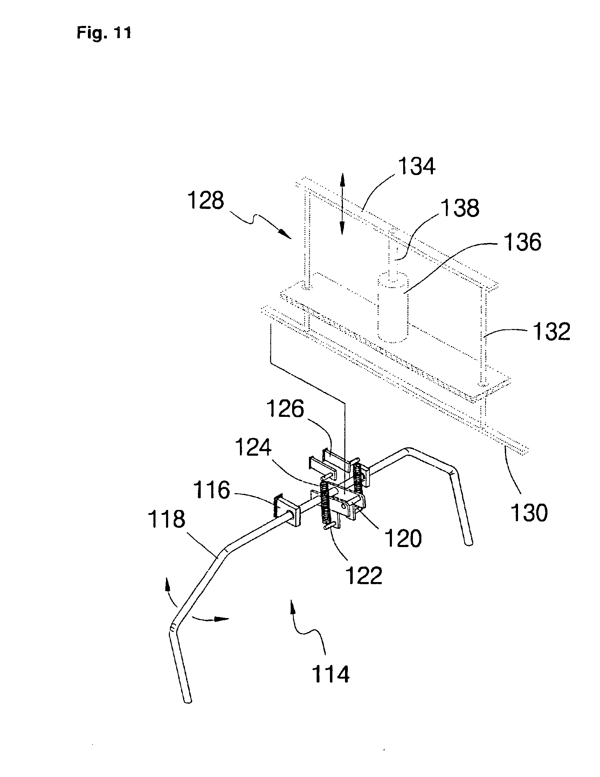

The locking member 114 (see Fig. 11) includes two supporters 116 welded to the wall of the rotation drum 74, and a holding bar 118 bent like a "U" shape is rotatably coupled to the supporter 116. A head 120 is coupled to the middle of the holding bar 118 while pins 122 protrude at opposite sides. Each pin 122 is coupled with a lower part of the extension spring 124 providing elasticity for locking the holding bar 118. An Upper part of the extension spring 124 is coupled to a supporter fastened to the wall of the rotation drum 74.

A press unit 128 is placed above the locking member 114 and exerts or stops a force to alternate between a locking state and a releasing state. The press unit 128 is fastened on the top of the washing part 14 and separated from the rolling device 70.

The press unit 128 arranged as above includes a push bar 130 for transferring a force to the head 120 of the locking member 114. The push bar 130 is breadthwise arranged while support bars 132 are vertically coupled to opposite sides of the push bar 130. A connection bar 134 is arranged breadthwise and coupled to the tops of the respect support bars 132. The center of the connection bar 134 is coupled to a top of a rod 138 of a press cylinder 136.

The press cylinder 136 is connected to the controller 20 and fastened to the top of the washing part 14.

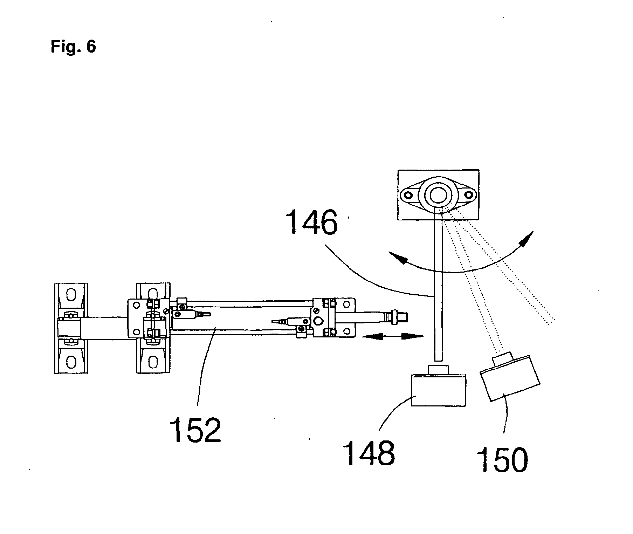

Further, a box sensing member 140 (see Fig. 10) is placed above the rotation drum 74 and checks the presence of the box 2 entering the inside of the rotation drums 74, The box sensing member 140 includes a touch bar 142 placed in an upper part between the rotation drums 74 and bent like a "U" shape, a rotary bar 144 welded to the top of the touch bar 142 as being breadthwise arranged and rotatably coupled to opposite walls of the washing part 14, an action bar 146 vertically welded to one end part of the rotary bar 144 and located on an outer wall of the washing part 14, fifth and sixth sensors 148 and 150 (see Fig. 6) arranged on the outer wall of the washing part 14 and checks the position of the action bar 146 so as to determine whether the box 2 enters or not, and a push cylinder 152 provided in the other end of the fifth sensor 148 and pushing the action bar 146 rearward.

At this time, the fifth and sixth sensors 148 and 150 and the push cylinder 152 are connected to the controller 20.

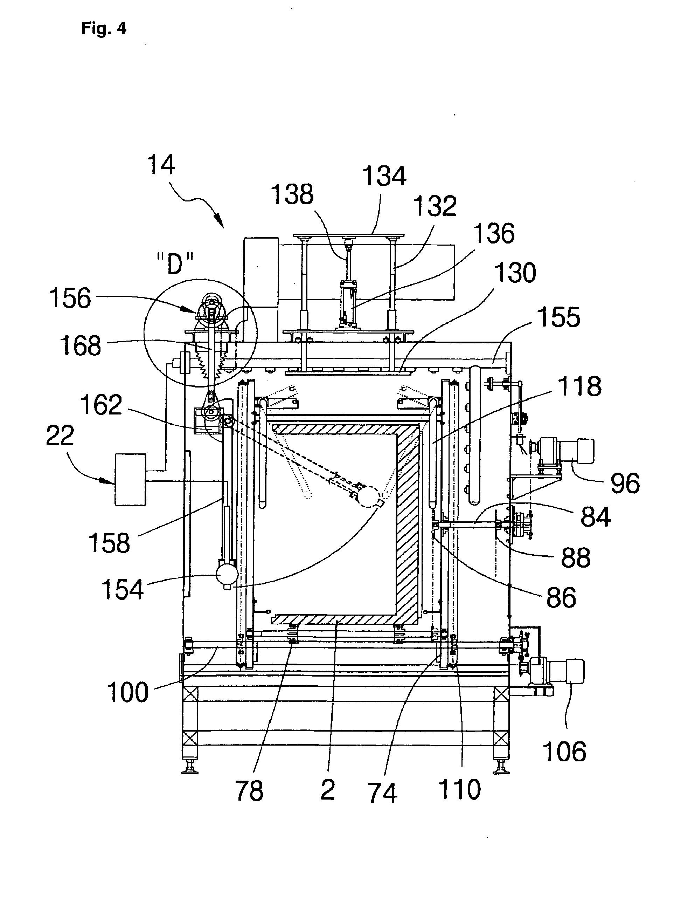

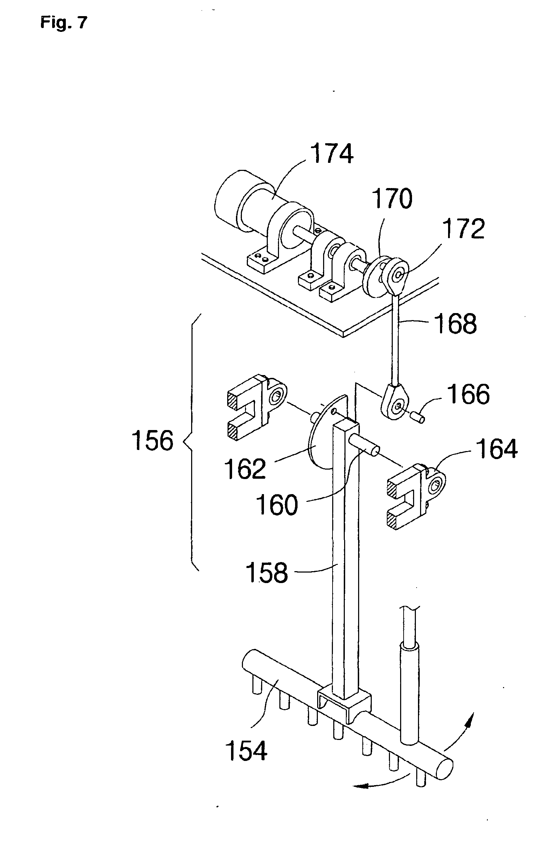

An inner nozzle 154 (see Fig. 4) provided in the washing part 14 is coupled with a shaking member 156 to exert a force so that the inner nozzle 154 can repetitively go in and out of the rotation drum 74. The shaking member 156 (see Fig. 7) includes an arm 158 vertically fastened to the top of the inner nozzle 154. A top end part of the arm 158 is coupled with a hinge shaft 160 and a semicircular cam plate 162. The hinge shaft 160 is rotatably coupled to a support 164 installed on the wall of the washing part 14.

A pin 166 is coupled to an upper part of the cam plate 162 in an eccentric position from the hinge shaft 160, and also coupled with a lower part of a rod 168 for transferring a driving force. An upper part of the rod 168 is coupled to an outside of the rotary plate 170 by a pin 172, and a shaft of a nozzle motor 174 supplying a driving force is coupled to the center of the rotary plate 170. The nozzle motor 174 is connected to the controller 20 and fastened to the top of the washing part 14.

Further, a guide bar 171 is lengthwise arranged in a lower part of an inner wall of each rotation drums 74 and guides the box 2 to enter. Outer nozzles 155 are respectively provided in the top and one lateral wall of the washing part 14. The inner nozzle 154 and the outer nozzle 155 are connected to a supplying pump 26 of the cleaning-fluid supplying unit 22.

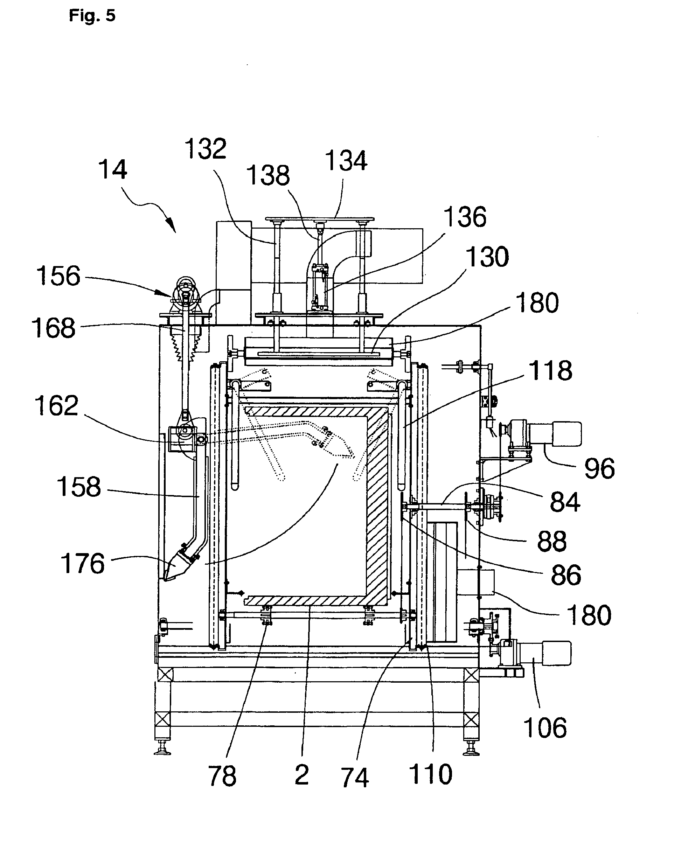

The fluid-removing part 16 and the drying part 18 provided in an exit side of the washing part 14 (see Fig. 3) are respectively provided with the rotation devices 70 having the same structure as described above. The shaking member 156 provided in each of the fluid-removing part 16 and the drying part 18 is coupled with an inner air knife 176 (see Fig. 5) for discharging high pressure air to remove fluid from and dry the inside of the box 2. The inner air knife 176 is connected to an air pump 178 (see Fig. 3) that supplies the high pressure air.

At this time, the front end part of the arm 158 of the shaking member 156 is bent 45 degrees so that an outlet of the inner air knife 176 can be angled 45 degrees. Thus, the high pressure air discharged from the inner air knife 176 can more easily remove the cleaning fluid left on the inner wall of the box 2. Alternatively, the arm 158 of the shaking member 156 may be formed in a straight line, so that the outlet of the inner air knife 176 can be oriented in the straight line.

Further, outer air knives 180 (see Fig. 5) are provided on the top and lateral wall of the fluid-removing part 16 and the drying part 18 in order to remove fluid from and dry the circumference of the box 2, and connected to the air pump 178.

Further, doors 182 are respectively provided to open and close each entrance and each exit of the washing part 14 (see Fig. 2), the fluid-removing part 16, and the drying part 18. A door cylinder 184 exerting a force is provided above the door 182, and connected to the controller 20.

The rotation part 12 is placed in the exit of the drying part 18 and makes the box 2 reversely rotate 90 degrees in the other direction, and connected to the controller 20. This rotation part 12 has the same structure as the rotation part 12 provided between the supplying part 10 and the washing part 14.

With the foregoing configuration, the present invention operates as follows.

First, if the boxes 2 stacked in the supplying part 10 (see Fig. 3) are discharged one by one from the distributor 8 by a command from the controller 20, and fall down on the conveyor 6, the first sensor 28 is turned on by the box 2 and transmits information to the controller 20. Then, the controller 20 transmits a command to the conveying motor 23 and thus operates the conveyor 6.

Then, the box 2 turns on the second sensor 50 (see Fig. 8) while entering the rotation part 12 by the operating conveyor 6. At this time, the controller 20 transmits a command for the operation to the conveying motor 42 on the basis of the received information. The conveying motor 42 supplies the driving force to the horizontal shaft 40 and operates the horizontal conveyor 36, and the horizontal conveyor 36 makes the box 2 enter the rotation part 12.

Simultaneously, the driving force of the conveying motor 42 is partially transferred to the horizontal shaft 40, the bevel gear 48 and the vertical shaft 46 in sequence, and operates the vertical conveyor 38. At this time, the box 2 enters the rotation part 12 by the horizontal conveyor 36 and the vertical conveyor 38, and moves along the upper guide bar 60 and the lateral guide bar 62.

If the box 2 entering as above reaches the third sensor 52, the controller 20 transmits a command for stopping the operation to the conveying motor 42 on the basis of the received information. Then, the horizontal conveyor 36 and the vertical conveyor 38 are simultaneously suspended for stopping the box 2.

Thereafter, if the controller 20 transmits a command for operation to the rotary motor 68 to rotate the support roller 64, the rotation drum 32 placed on and contacting the support roller 64 is rotated in a forward direction, i.e., rightward.

At this time, the support roller 64 placed at the other side of the rotation drum 32 freewheels while supporting the rotation drum 32.

When the rotation drum 32 rotates as above, the horizontal projection pin 54 is separated from an adjusting sensor 58 and the vertical projection pin 56 is positioned in the adjusting sensor 58. At this time, the controller 20 transmits a command for stopping the operation to the rotary motor 68 on the basis of the information transmitted from the adjusting sensor 58.

Thus, the box 2 is rotated 90 degrees from a state where its opening is oriented upward as shown in Fig. 9a to a state where the opening is oriented rightward as shown in Fig. 9b. At the same time, the horizontal conveyor 36 provided in the rotation drum 32 is in a vertically arranged state, and the vertical conveyor 38 is in a horizontally arranged state.

Thereafter, the controller 20 transmits the command for the operation to the door cylinder 184 (see Fig. 2) and opens the door 182, and then transmits commands for the operation to the conveying motor 42 of the rotation part 12 and the conveying motor 96 of the rolling device 70. At this time, the horizontal conveyor 36 and the vertical conveyor 38 of the rotation part 12 are operated together by the driving force of the conveying motor 42 and convey the box 2 to the rolling device 70. Simultaneously, the box 2 enters the rolling device 70 by the conveyor 78 operating by the driving force of the conveying motor 96 of the rolling device 70.

If the third sensor 52 is turned off after the box 2 enters the rotation part 12 (see Fig. 8), the controller 20 transmits both the command for stopping the operation to the conveying motor 42 provided in the rotation part 12 and the command for the operation to the rotary motor 68.

Thus, the support roller 64 reversely rotates the rotation drum 32 while being reversely rotated by the driving force of the rotary motor 68.

When the rotation drum 32 is reversely rotated as above, the vertical projection pin 56 is separated from the adjusting sensor 58 and the horizontal projection pin 54 reaches the adjusting sensor 58. At this time, the controller 20 transmits the command for stopping the operation to the rotary motor 68 on the basis of the information transmitted from the adjusting sensor 58, thereby stopping the rotation drum 32.

Thus, the rotation drum 32 rotates 90 degrees in a reverse direction and returns to an initial state, so that the horizontal conveyor 36 can be in the horizontally arranged state and the vertical conveyor 38 can be in the vertically arranged state.

While the box 2 enters from the rotation part 12 to the rolling device 70 (see Fig. 10) of the washing part 14, the driving force of the conveying motor 96 of the rolling device 70 rotates the both the guiding shaft 92 and the guiding roller 94 while operating the conveyor 78. At this time, the box 2 enters the rolling device 70 by the guiding roller 94 and the conveyor 78.

If the box 2 entering as above reaches the end part of the conveyor 78, the touch bar 142 rotates both the rotary bar 144 and the action bar 146 while being pushed back, and at the same time the action bar 146 (see Fig. 6) moves from the position of the fifth sensor 148 to the position of the sixth sensor 150.

If receiving an on-signal from the fifth sensor 148, the controller 20 determines that the box 2 is not in the rolling device 70. If receiving an off-signal from the fifth sensor 148 and an on-signal from the sixth sensor 150, the controller 20 determines that the box 2 completely enters the rolling device 70.

Thus, if receiving the on-signal from the sixth sensor 150, the controller 20 transmits a command for stopping the operation to the conveying motor 96, and suspends the operation of the conveyor 789 and the rotation of the guiding roller 94, thereby stopping the box 2.

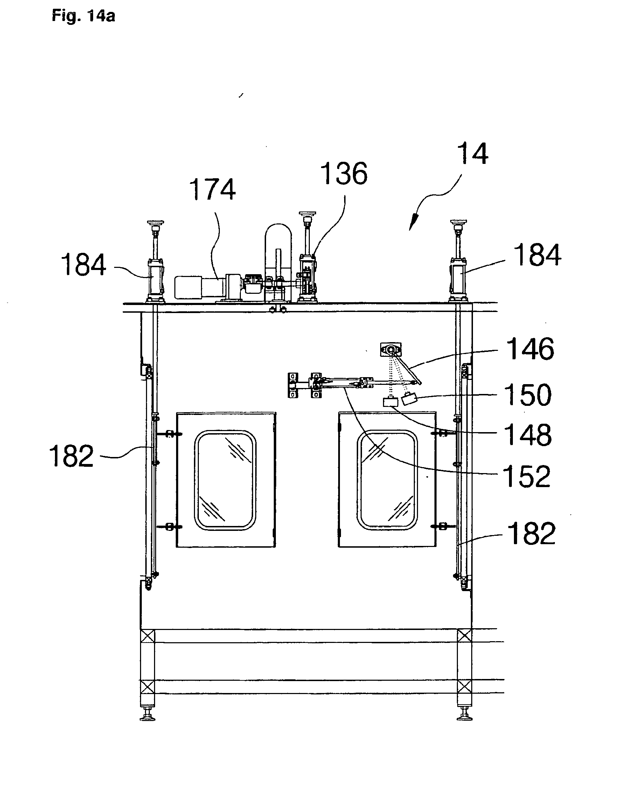

Simultaneously, if the controller 20 transmits a command for forward movement of the rod 138 to the push cylinder 152 (see Fig. 6) as shown in Fig. 14a and pushes the action bar 146, the rotary bar 144 (see Fig. 10) is rotated by the action bar 146 and thus the touch bar 142 is pushed back, so that the touch bar 142 can get out of the box 2.

When the box 2 enters the rolling device 70 as above, the push bar 130 of the press unit 128 is pressing the head 120 of the locking member 114. At this time, the holding bar 118 is maintained in a vertically arranged state, so that the inside of the rolling device 70 can be opened as a passage where the box 2 smoothly enters.

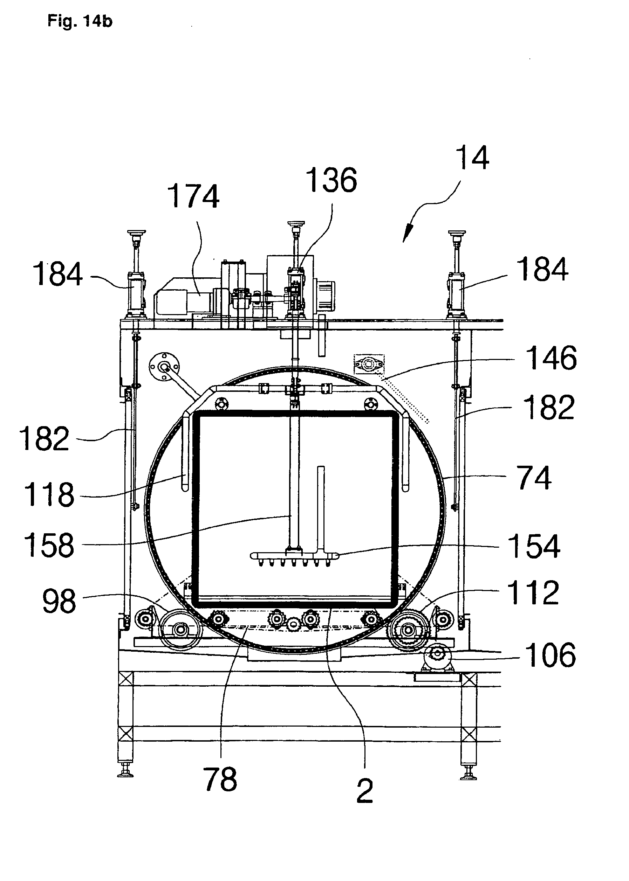

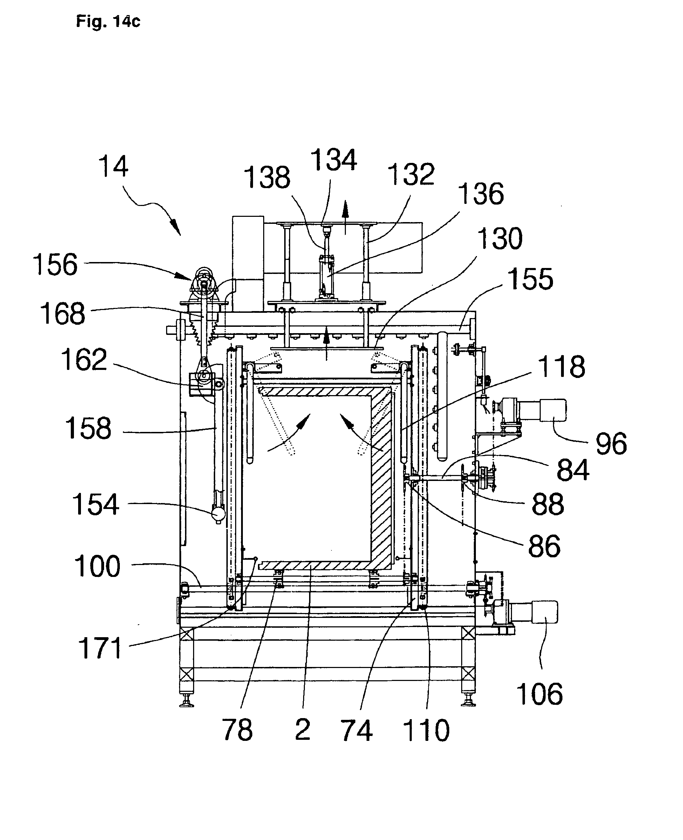

Thereafter, if the conveyed box 2 is stopped on the conveyor 78 as shown in Fig. 14b, the controller 20 transmits the command for the forward movement of the rod 138 to the press cylinder 136s as shown in Fig. 14c, so that the push bar 130 can be separated from the head 120 of the locking member 114.

At this time, the force of the push bar 130 exerted on the head 120 is released, and thus the head 120 is pulled upward by the elasticity of the extension spring 124. The head 120 rotates the holding bar 118 upward 20 to 60 degrees, and at the same time the opposite sides of the holding bar 118 hold the lateral walls of the box 2 and become the locking state.

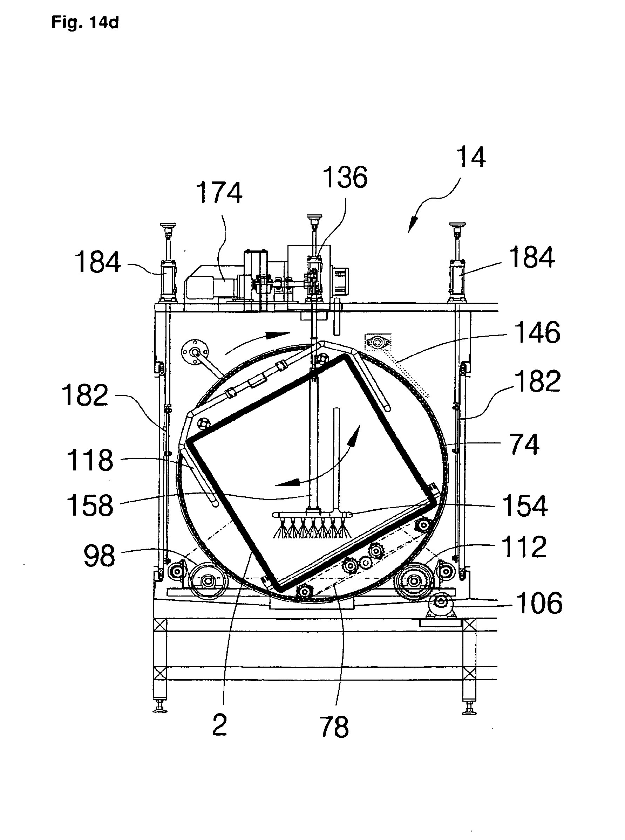

Thereafter, if the controller 20 transmits the command for the operation to the door cylinder 184 in order to close the door 182, and then transmits the commend for the operation to the rotary motor 106 in order to transfer the driving force to the rotary shaft 100 through the transfer chain 104, the drum sprocket 112 transfers the driving force to the drum chain 110 and thus rotates the rotation drum 74 as shown in Fig. 14d and at the same time the support roller 98 supports and rotates the rotation drum 74.

At this time, the rotation drum 74 is rotated on the support roller 98 and the drum sprocket 112 while containing the conveyor 78, the locking member 114 and the box 2 therein.

Thereafter, if the controller 20 transmits a command for operation to the supplying pump 26 of the cleaning-fluid supplying unit 22 (see Fig. 3), the cleaning fluid stored in a tank 24 is sprayed to both the inside and outside of the box 2 through the inner and the outer nozzles 155 and 155.

In the above state, if the controller 20 transmits a command for the operation to the nozzle motor 174 constituting the shaking member 156 (see Fig. 7), the rotary plate 170 rotates and lifts up and down the rod 168. At this time, another pin 166 coupled to the lower end part of the rod 168 is eccentrically positioned with regard to the hinge shaft 160, so that the cam plate 162 and the arm 158 can be repetitively rotated forward and backward with respect to the hinge shaft 160.

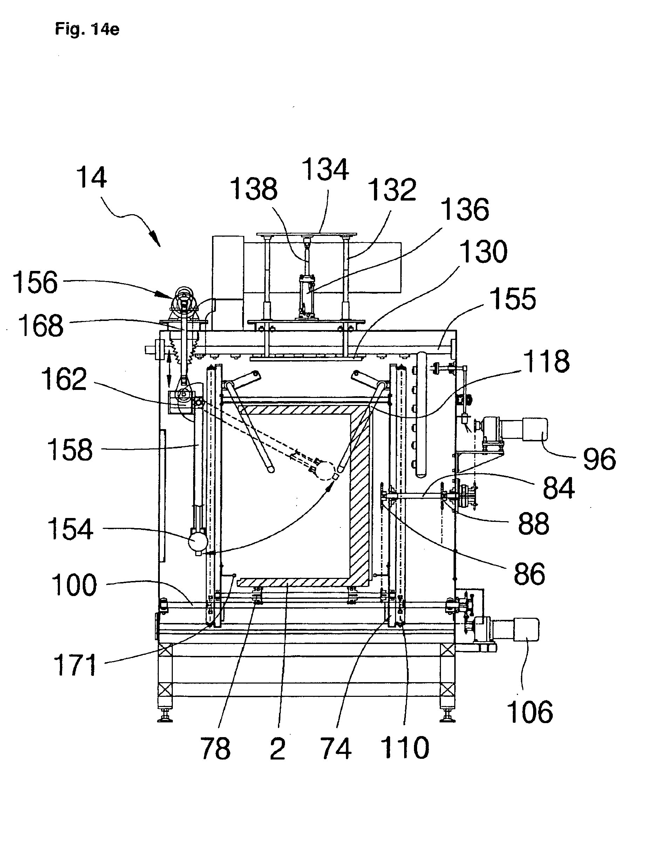

Thus, the arm 158 shakes together with the inner nozzle 154 provided in a lower end part thereof as shown in Fig. 14e, and the inner nozzle 154 repetitively goes in and out of the rolling device 70 through the guide hole 72 of the rotation drum 74.

In the above state, the cleaning fluid sprayed from the inner nozzle 154 washes the opening of the box 2 to the middle of the bottom of the box 2. At this time, the rotation drum 74 (see Fig. 4) is continuously rotated by the driving force of the rotary motor 106, so that the cleaning fluid sprayed from the inner nozzle 154 can wash the inner wall and the bottom of the box 2, i.e., wash throughout the box 2.

At this time, the rotation drum 74 is rotated 90 degrees with the opening oriented rightward, so that the cleaning fluid sprayed to the inside of the box 2 can be directly discharged without any residue.

If the rotation drum 74 is rotated once, the projection pin 102 of the transfer chain 104 (see Fig. 12) is checked once by the fourth sensor 108 and thus the controller 20 determines that the rotation drum 74 rotates once.

Such a washing process is usually completed when the box 2 is rotated five to six times. The number of times the projection pin 102 is checked by the fourth sensor 108 is set up as five to sixth times in the controller 20, the controller 20 rotates or stops the rotation drum 74 on the basis of the information transmitted from the fourth sensor 108.

Thereafter, if the washing process of the box 2 is completed, the controller 20 transmits a command for stopping the operation to the rotary motor 106 and the nozzle motor 174.

Thus, the conveyor 78 is suspended in the horizontally arranged state like the initial state thereof, and the arm 158 of the shaking member 156 is in the vertically arrange state like the initial state thereof. Also, the inner nozzle 154 is positioned outside the rotation drum 74.

In the above state, if the controller transmits a commend for backward movement of the rod 138 to the press cylinder 136 (see Fig. 11), the push bar 130 presses the head 120 and the head 120 makes the holding bar 118 be rotated in the vertically arranged state while reacting against the elasticity of the extension spring 124.

At this time, the holding bar 118 is separated from the lateral wall of the box 2 and thus becomes the releasing state.

In succession, if the controller 20 transmits a command for the operation to the push cylinder 152 (see Fig. 6) to move the rod back, the action bar 146 returns to the vertically arranged state by its own weight together with the touch bar 142 since the force of the rod is removed. At this time, the touch bar 142 stops on the box 2 while reversely rotating the rotary bar 144, and the action bar 146 is positioned on the sixth sensor 150.

At this time, the controller 20 determines that the box 2 stays in the rolling device 70 on the basis of the on-signal transmitted from the sixth sensor 150.

Then, if the controller 20 transmits a command for the operation to the door cylinder 184 in order to open the door 182, and transmits a command for the operation to the conveying motor 96 (see Fig. 12) to rotate the guide roller 94 while operating the conveyor 78 as described above, the box 2 goes out of the rolling device 70 and enters the fluid-removing part 16 (see Fig. 2).

As above, if the box 2 completely exits the rolling device 70, the touch bar 142 becomes in the vertically arranged state by its own weight and thus moves the action bar 146 from the sixth sensor 150 to the fifth sensor 148. Therefore, the controller 20 determines that the box 2 is not in the rolling device 70.

Thereafter, the controller 20 transmits the command for the operation again to the door cylinder 184 so as to close the door 182.

Meanwhile, the locking state of the locking member 114 is released in the fluid-removing part 16 like the washing part 14, thereby allowing the box 2 to enter the rolling device 70. Then, the locking member 114 is locked to hold the box 2, and the action bar 146 is pushed out by the rod of the push cylinder 152 so that the touch bar 142 can be pushed in the rear of the box 2.

In the above state, the controller 20 transmits a command for the operation to the air pump 178 and rotates the rotation drum 74 while supplying high pressure air. At the same time, the controller 20 transmits a command for the operation to the shaking member 156 and shakes the inner air knife 176.

At this time, the high pressure air discharged through the inner and outer air knives 176 and 180 removes the cleaning fluid from the inner and outer surfaces of the box 2.

If such fluid-removing work is completed, the box 2 locked by the locking member 114 is released and at the same time the rod of the push cylinder 152 is moved back so that the touch bar 142 can be located on the box 2.

Thereafter, the controller 20 transmits a command for the operation to the door cylinder 184 so as to open the door 182, and transmits a command for the operation to the conveyor 78 so as to move the box 2 from the fluid-removing part 16 to the drying part 18.

The drying part 18 dries the box 2 with high pressure air by the same procedure as that of the fluid-removing part 16, and then moves the box 2 to the rotation part 12.

The box 2 reaching the rotation part 12 is being rotated 90 degrees in one direction. At this time, the rotation part 12 makes the rotation drum 32 be rotated 90 degrees in the other direction on the contrary to the rotation part 12 placed in the entrance of the washing part 14, so that the opening of the box 2 can be oriented upward.

Thereafter, the box 2 moves to a taking-out part (not shown) placed in the exit side of the rotation part 12.

As described above, first, the large-sized box 2 is rotated 90 degrees by the rotation part 12 in one direction and then supplied to the washing part 14 so that the sprayed cleaning fluid can be directly and naturally removed without being left inside and outside the box 2, thereby significantly improving a washing function of the washing machine 4.

Second, the cleaning fluid is sprayed from the inner and outer nozzles 154 and 155 to the inside and outside of the box 2 and washes the box 2 in the state that the inner nozzle 154 repetitively goes in and out of the rolling device 70 as being shaken and at the same time the rotation body 70 including the large-sized box 2 is rotated as being rolled, thereby remarkably enhancing a washing efficiency of the washing machine 4.

## Claims

1. An automatic washing machine for a large-sized box, which comprises a supplying part (10) supplying boxes (2) one by one through a conveyor (6) and a distributor (8); a washing part (14) placed in an exit side of the supplying part (10) and washing the box (2) with a cleaning fluid; a fluid-removing part (16) placed in an exit side of the washing part (14) and removing the cleaning fluid from a surface of the box (2) by high pressure air; a driving part (18) placed in an exit side of the fluid-removing part (16) and drying the box (2) by high pressure air; a rotation part (12); and a controller (20) connected to and transferring a command for operation to the supplying part (10), the washing part (14), the fluid-removing part (16) the drying part (18), and the rotation part (12), **characterized in that** the rotation part (12) is provided between the supplying part (10) and the washing part (14), said rotation part (12) making the box (2) conveyed from the supplying part (10) be forward rotated 90° in one direction and conveying the rotated box (2) to the washing part (14).

2. The automatic washing machine for the large-sized box according to claim 1, **characterized in that** the rotation part (12) comprises: two rotation drums (32) formed with guiding holes (30) and connected by a connection bar (34); horizontal and vertical conveyors (36, 38) placed between the rotation drums (32) and fastened to an inside between the rotation drums (32), a conveying motor (42) providing a driving force to the horizontal and vertical conveyors (36, 38) and fastened between the rotation drums (32); and a rotary motor (68) placed under and separated from the rotation drum (32), and the conveying motor (42) and the rotary motor (68) are connected to the controller (20).

3. The automatic washing machine for the large-sized box according to claim 2, **characterized in that** horizontal and vertical projection pins (5, 56) are spaced apart from each other and placed in a front of the rotation drum (32); an adjusting sensor (58) is separately placed in the front of the rotation drum (32) and connected to the controller (20); and second and third sensors (50, 2), which are placed under the horizontal conveyor (36) as being spaced apart from each other for checking whether the box (2) enters, are connected to the controller (20).

4. The automatic washing machine for the large-sized box according to claim 2, **characterized in that** support rollers (64) are rotatably provided at opposite sides of a lower part of each rotation drum (32) while contacting the rotation drums (32); the support rollers (64) are coupled to opposite end parts of a rotary shaft (66); and the shaft of the rotary motor (68) is connected to the rotary shaft (66) by a chain.

5. The automatic washing machine for the large-sized box according to claim 2, **characterized in that** an upper guide bar (60) for guiding the box (2) is arranged above the horizontal conveyor (36) and coupled to the rotation drum (32), and a lateral guide bar (62) for guiding the box (2) is arranged above the vertical conveyor (38) and coupled to the rotation drum (32).

6. The automatic washing machine for the large-sized box according to claim 1, **characterized in that** the washing part (14) is provided with a rolling device (70) rolling the box (2) at a stop position and connected to the controller (20), and
the rolling device (70) comprises two rotation drums (74) each formed with a guiding hole (72) and connected by a connection bar (76), a conveyor (78) placed between the rotation drums (74) and conveying the box (2), a locking member (114) placed in an upper part of the rotation drum (74) and locking and releasing the entered box (2), a conveying motor (96) placed outside the rotation drum (74) as being fastened to a wall of the washing part (14) and providing a driving force to the conveyor (78), and a rotary motor (106) placed under the rotation drum (74) as being fastened to the wall of the washing part (14) and providing a rotational force to the rotation drum (74); the locking member (114), the conveying motor (96) and the rotary motor (106) are connected to the controller (20); and inner and outer nozzles (154, 155) receiving and spraying the cleaning fluid from the cleaning-fluid supplying unit (22) are provided in the washing part (14).

7. The automatic washing machine for the large-sized box according to claim 6, **characterized in that** support rollers (98) are rotatably provided at opposite sides of a lower part of each rotation drum (74) while contacting the rotation drums (74); the support rollers (98) are coupled to opposite end parts of a rotary shaft (100); the two rotary shafts (100) are connected by a transfer chain (104) coupled with a projection pin (102); a fourth sensor (108) for checking the projection pin (102) is provided in an outer side of the transfer chain (104), and the fourth sensor (108) is connected to the controller (20).

8. The automatic washing machine for the large-sized box according to claim 6, **characterized in that** a press unit (128) exerting or stopping a force to become a locking state and a releasing state is placed on and fastened to the washing part (14), and is connected to the controller (20) as being separated from the rolling device (70).

9. The automatic washing machine for the large-sized box according to claim 6, **characterized in that** the inner nozzle (154) is coupled with a shaking member (156) to exert a force so that the inner nozzle (154) can repetitively go in and out of the rotation drum (74), and the shaking member (156) is connected to the controller (20) as being fastened to an upper wall of the washing part (14).

10. The automatic washing machine for the large-sized box according to claim 6, **characterized in that** a box sensing member (140) for checking presence of the box (2) entering the rotation drum (74) is placed above the rotation drum (74) and fastened to the wall of the washing part (14).

## Patentansprüche

1. Automatische Waschmaschine für einen großformatigen Kasten, umfassend: einen Zuführungsteil (10), der Kästen (2) einen nach dem anderen durch eine Fördereinrichtung (6) und einen Verteiler (8) zuführt; einen Waschteil (14), der an einer Ausgangsseite des Zuführungsteils (10) angeordnet ist und den Kasten (2) mit einer Reinigungsflüssigkeit wäscht; einen Flüssigkeits-Entfernungs-Teil (16), der an einer Ausgangsseite des Waschteils (14) angeordnet ist und die Reinigungsflüssigkeit von der Oberfläche des Kastens (2) durch Hochdruckluft entfernt; einen Trocknungsteil (18), der an einer Ausgangsseite des Flüssigkeits-Entfernungs-Teils (16) angeordnet ist und den Kasten (2) durch Hochdruckluft trocknet: einen Rotationsteil (12); und eine Steuerung (20), die mit dem Zuführungsteil (10), dem Waschteil (14), dem Flüssigkeits-Entfernungs-Teil (16), dem Trocknungsteil (18) und dem Rotationsteil (12) verbunden ist und ein Betriebskommando zu ihnen überträgt, **dadurch gekennzeichnet, dass** der Rotationsteil (12) zwischen dem Zuführungsteil (10) und dem Waschteil (14) vorgesehen ist, wobei der Rotationsteil (12) bewirkt, dass der Kasten (2), der vom Zuführungsteil (10) her befördert wird, nach vorne um 90° in eine Richtung um sich selbst gedreht und der gedrehte Kasten (2) zum Waschteil (14) befördert wird.

2. Automatische Waschmaschine für den großformatigen Kasten nach Anspruch 1, **dadurch gekennzeichnet, dass** der Rotationsteil (12) umfasst zwei Rotationstrommeln (32), die mit Führungslöchern (30) ausgebildet und mit einer Verbindungsstange (34) verbunden sind; horizontale und vertikale Fördereinrichtungen (36, 38), die zwischen den Rotationstrommeln (32) angeordnet und an einer Innenseite zwischen den Rotationstrommeln (32) befestigt sind, einen Fördermotor (42), der eine Antriebskraft für die horizontalen und vertikalen Fördereinrichtungen (36, 38) vorsieht und zwischen den Rotationstrommeln (32) befestigt ist; und einen Rotationsmotor (68), der unter der Rotationstrommel (32) angeordnet und von ihr getrennt ist, und dass der Fördermotor (42) und der Rotationsmotor (68) mit der Steuerung (20) verbunden sind.

3. Automatische Waschmaschine für den großformatigen Kasten nach Anspruch 2, **dadurch gekennzeichnet, dass** horizontal und vertikal vorstehende Stifte (54, 56) in Abständen voneinander angeordnet und an einer Vorderseite der Rotationstrommel (32) platziert sind; ein Justiersensor (58) getrennt an der Vorderseite der Rotationstrommel (32) angeordnet und mit der Steuerung (20) verbunden ist; und dass zweite und dritte Sensoren (50, 52), die unter der horizontalen Fördereinrichtung (36) platziert sind, so dass sie voneinander einen Abstand aufweisen, um zu überprüfen, ob der Kasten (2) hineinkommt, mit der Steuerung (20) verbunden sind.

4. Automatische Waschmaschine für den großformatigen Kasten nach Anspruch 2, **dadurch gekennzeichnet, dass** Auflagerollen (64) drehbar auf gegenüber liegenden Seiten eines unteren Teils jeder Rotationstrommel (32) vorgesehen sind, wobei sie in Kontakt zu den Rotationstrommeln (32) stehen; die Auflagerollen (64) mit gegenüber liegenden Endteilen einer Drehwelle (66) gekoppelt sind; und die Welle des Rotationsmotors (68) mit einer Kette mit der Drehwelle (66) verbunden ist.

5. Automatische Waschmaschine für den großformatigen Kasten nach Anspruch 2, **dadurch gekennzeichnet, dass** eine obere Führungsstange (60) zum Führen des Kastens (2) über der horizontalen Fördereinrichtung (36) angeordnet und mit der Rotationstrommel (32) gekoppelt ist, und eine seitliche Führungsstange (62) zum Führen des Kastens (2) über der vertikalen Fördereinrichtung (38) angeordnet und mit der Rotationstrommel (32) gekoppelt ist.

6. Automatische Waschmaschine für den großformatigen Kasten nach Anspruch 1, **dadurch gekennzeichnet, dass** am Waschteil (14) eine Rotationsvorrichtung (70) vorgesehen ist, die den Kasten (2) in einer Anhalteposition dreht und mit der Steuerung (20) verbunden ist, und die Rotationsvorrichtung (70) zwei Rotationstrommeln (74) umfasst, die jeweils mit einem Führungsloch (72) ausgebildet und durch eine Verbindungsstange (76) verbunden sind, eine Fördereinrichtung (78), die zwischen den Rotationstrommeln (74) angeordnet ist und den Kasten (2) befördert, ein Arretierungselement (114), das in einem oberen Teil der Rotationstrommel (74) angeordnet ist und den hineingekommenen Kasten (2) arretiert und freigibt, einen Fördermotor (96), der außerhalb der Rotationstrommel (74) angeordnet und an einer Wand des Waschteils (14) befestigt ist und eine Antriebskraft für die Fördereinrichtung (78) vorsieht, und einen Rotationsmotor (106), der unter der Rotationstrommel (74) angeordnet und an der Wand des Waschteils (14) befestigt ist und eine Drehkraft für die Rotationstrommel (74) bereitstellt; das Arretierungselement (114), der Fördermotor (96) und der Rotationsmotor (106) mit der Steuerung (20) verbunden sind; und innere und äußere Düsen (154, 155), die die Reinigungsflüssigkeit von der Reinigungsflüssigkeits-Zufuhreinheit (22) empfangen und versprühen, im Waschteil (14) vorgesehen sind.

7. Automatische Waschmaschine für den großformatigen Kasten nach Anspruch 6, **dadurch gekennzeichnet, dass** Auflagerollen (98) drehbar auf gegenüber liegenden Seiten eines unteren Teils jeder Rotationstrommel (74) vorgesehen sind, wobei sie in Kontakt zu den Rotationstrommeln (74) stehen; die Auflagerollen (98) mit gegenüber liegenden Endteilen einer Drehwelle (100) gekoppelt sind; und die beiden Drehwellen (100) mit einer Übertragungskette (104) verbunden sind, die mit einem vorstehenden Stift (102) gekoppelt ist; ein vierter Sensor (108) zur Überprüfung des vorstehenden Stiftes (102) an einer Außenseite der Übertragungskette (104) vorgesehen ist, und der vierte Sensor (108) mit der Steuerung (20) verbunden ist.

8. Automatische Waschmaschine für den großformatigen Kasten nach Anspruch 6, **dadurch gekennzeichnet, dass** eine Presseinheit (128), die eine Kraft ausübt oder löst, um In einen arretierten Zustand und einen gelösten Zustand zu kommen, auf dem Waschteil (14) angeordnet und an ihm befestigt und mit der Steuerung (20) verbunden und von der Rotationsvorrichtung (70) getrennt ist.

9. Automatische Waschmaschine für den großformatigen Kasten nach Anspruch 6, **dadurch gekennzeichnet, dass** die innere Düse (154) mit einem Rüttelelement (156) gekoppelt ist, um eine Kraft auszuüben, so dass die innere Düse (154) wiederholt in die Rotationstrommel (74) hinein und hinaus fahren kann, und das Rüttelelement (156) mit der Steuerung (20) verbunden und an einer oberen Wand des Waschteils (14) befestigt ist.

10. Automatische Waschmaschine für den großformatigen Kasten nach Anspruch 6, **dadurch gekennzeichnet, dass** ein Kastenerkennungselement (140) zum Überprüfen des Vorhandenseins des Kastens (2), der in die Rotationstrommel (74) eintritt, über der Rotationstrommel (74) angeordnet und an der Wand des Waschteils (14) befestigt ist.

## Revendications

1. Machine de lavage automatique pour une boîte de grande taille, qui comporte une partie d'alimentation (10) alimentant des boîtes(2) une par une à travers un convoyeur (6) et un distributeur (8) ; une partie de lavage (14) disposée dans un côté de sortie de la partie d'alimentation (10) et lavant la boîte (2) au moyen d'un fluide de nettoyage ; une partie d'élimination du fluide (16) disposée dans un côté de sortie de la partie de lavage (14) et éliminant le fluide de nettoyage d'une surface de la boîte (2) au moyen d'air à haute pression ; une partie de séchage (18) disposée dans un côté de sortie de la partie d'élimination de fluide (16) et séchant la boîte (2) au moyen d'air à haute pression ; une partie rotative (12), et un calculateur (20) connecté à la partie d'alimentation (10), la partie de lavage (14), la partie d'élimination de fluide (16), la partie de séchage (18) et la partie rotative (12), et transmettant à ces derniers une commande de fonctionnement, **caractérisée en ce que** la partie rotative (12) est effectué entre la partie d'alimentation (10) et la partie de lavage (14), ladite partie rotative (12) provoquant la rotation de 90° vers l'avant, sur son propre axe et dans une direction, de la boîte (2) convoyée depuis la partie d'alimentation (10) et convoyant de la boîte tournée (2) vers la partie de lavage (14).

2. Machine de lavage automatique pour la boîte de grande taille selon la revendication 1, **caractérisée en ce que** la partie rotative (12) comporte: deux tambours de rotation (32) formés avec des trous de guidage (30) et connectés par une barre de connexion (34) ; des convoyeurs horizontaux et verticaux (36, 38) disposés entre les tambours de rotation (32) et fixés à un côté intérieur entre les tambours de rotation (32), un moteur de convoyage (42) exerçant une force d'entraînement sur les convoyeurs horizontaux et verticaux (36, 38) et fixé entre les tambours de rotation (32) : et un moteur rotatif (68) disposé sous le tambour de rotation (32) et séparé de ce dernier, et le moteur de convoyage (42) et le moteur rotatif (68) sont connectés au calculateur (20).

3. Machine de lavage automatique pour la boîte de grande taille selon la revendication 2, **caractérisée en ce que** des broches saillantes horizontales et verticales (54, 56) sont distancées l'une de l'autre et disposées à un côté avant du tambour de rotation (32) ; un capteur de réglage (58) est disposé séparément dans le côté avant du tambour de rotation (32) et connecté au calculateur (20) ; et un second et un troisième capteurs (50, 52), qui sont disposés sous le convoyeur horizontal (36) comme étant distancés l'un de l'autre pour vérifier si les entrées de boîtes (2), sont connectées au calculateur (20).

4. Machine de lavage automatique pour la boîte de grande taille selon la revendication 2, **caractérisée en ce que** des galets de support (64) sont montés de manière rotative à des côtés opposés d'une partie inférieure de chaque tambour de rotation (32) lorsqu'ils sont en contact avec les tambours de rotation (32) ; les galets de support (64) sont couplés à des parties d'extrémité opposées d'un arbre rotatif (66) ; et l'arbre du moteur rotatif (68) est connecté à l'arbre rotatif (66) par une chaîne.

5. Machine de lavage automatique pour la boîte de grande taille selon la revendication 2, **caractérisée en ce qu'**une barre de guidage supérieure (60) pour guider la boîte (2) est disposée au-dessus du convoyeur horizontal (36) et couplée au tambour de rotation (32), et une barre de guidage latérale (62) pour guider la boîte (2) est disposée au-dessus du convoyeur vertical (38) et couplé au tambour de rotation (32).

6. Machine de lavage automatique pour la boîte de grande taille selon la revendication 1, **caractérisée en ce que** la partie de lavage (14) est munie d'un dispositif de roulement (70) roulant la boite (2) à une position d'arrêt et connectée au calculateur (20), et
le dispositif de roulement (70) comporte deux tambours de rotation (74) formés chacun avec un trou de guidage (72) et connectés par une barre de connexion (76), un convoyeur (78) disposé entre les tambours de rotation (74) et convoyant la boîte (2), un membre de verrouillage (114) disposé dans une partie supérieure du tambour de rotation (74) et verrouillant et relâchant la boîte introduite (2), un moteur de convoyage (96) disposé hors du tambour de rotation (74) comme étant fixé à une paroi de la partie de lavage (14) et exerçant une force d'entraînement sur le convoyeur (78), et un moteur rotatif (106) disposé sous le tambour de rotation (74) comme étant fixé sur la paroi de la partie de lavage (14) et exerçant une force rotationnelle sur le tambour de rotation (74) ; le membre de verrouillage (114), le moteur de convoyage (96) et le moteur rotatif (106) sont connectés au calculateur (20) ; et des lances intérieures et extérieures (154, 155) recevant et pulvérisant le fluide de nettoyage provenant de l'unité d'alimentation en fluide de nettoyage (22) sont prévues dans la partie de lavage (14).

7. Machine de lavage automatique pour la boîte de grande taille selon la revendication 6, **caractérisée en ce que** des galets de support (98) sont montés de manière rotative à des côtés opposés d'une partie inférieure de chaque tambour de rotation (74) lorsqu'ils sont en contact avec les tambours de rotation (74) ; les galets de support (98) sont couplés à des parties d'extrémité opposées d'un arbre rotatif (100) ; les deux arbres rotatifs (100) sont connectés par une chaîne de transfert (104) couplée à une broche saillante (102) ; un quatrième capteur (108) pour vérifier la broche saillante (102) est prévu sur un côté extérieur de la chaîne de transfert (104), et le quatrième capteur (108) est connecté au calculateur (20).

8. Machine de lavage automatique pour la boite de grande taille selon la revendication 6, **caractérisée en ce qu'**une unité de pressage (128) exerçant ou arrêtant une force pour adopter un état de verrouillage ou un état de relâchement est disposée sur la partie de la lavage (14) et fixée à cette dernière et elle est connectée au calculateur (20) comme étant séparée du dispositif de roulement (70).

9. Machine de lavage automatique pour la boîte de grande taille selon la revendication 6, **caractérisée en ce que** la lance intérieure (154) est couplée à un membre à secousses (156) pour exercer une force telle que la lance intérieure (154) puisse répétitivement entrer et sortir du tambour de rotation (74), et le membre à secousses (156) est connecté au calculateur (20) comme étant fixé sur une paroi supérieure de la partie de lavage (14).

10. Machine de lavage automatique pour la boîte de grande taille selon la revendication 6, **caractérisée en ce qu'**un membre de détection de boîte (140) pour détecter la présence de la boîte (2) entrant dans le tambour de rotation (74) est disposé au-dessus du tambour de rotation (74) et fixé sur la paroi de la partie de lavage (14).
